# EUROPÄISCHE PATENTANMELDUNG

(11) **EP 1 236 947 A1**
(43) Veröffentlichungstag der Anmeldung: **04.09.2002**
(21) Anmeldenummer: 01122343.5
(22) Anmeldetag: 19.09.2001
(51) Int. Cl.: F16L 19/06, F16L 19/00, F16L 19/08

(54) **Klemmverschraubung mit Stützhülse**

(30) Priorität: 03.03.2001 DE 10110356
(71) Anmelder: Anton Hummel Verwaltungs GmbH, 79183 Waldkirch (DE)
(72) Erfinder: Seifert, Rainer, 79189 Bad Krozingen (Tunsel) (DE); Adolf, Jürgen, 79211 Denzlingen (DE); Steiner, Rolf, 79279 Vörstetten (DE); Bartholomä, Mario, 79297 Winden (DE); Reich, Günter, 79215 Elzach (DE); Stratz, Manfred, 79263 Simonswald (DE)
(74) Vertreter: Maucher, Wolfgang, Dipl.-Ing.

(57) **Zusammenfassung**

Eine Klemmverschraubung (1) dient zum Befestigen eines länglichen Körpers oder Rohres (2), also einer zum Führen einer Flüssigkeit geeigneten Leitung. Sie weist dazu eine Aufnahmehülse (3) zum Einstecken des Endes (2a) des Rohres (2) und eine mit dieser Aufnahmehülse (3) verschraubbare Überwurfmutter (6) sowie einen durch die Verschraubung an dem Rohr (2) anpreßbaren Klemmring (7) auf, der mittels sich verjüngender Flächen stirnseitig beaufschlagt und beim Anziehen des Gewindes (5) der Verschraubung mit sich verjüngenden Formen gegen das Rohr (2) hin verformbar und daran andrückbar ist. Zur Aufnahme der Klemmkraft gehört zu der Klemmverschraubung ferner eine in axialer Richtung lose Stützhülse (9), die im Klemmbereich in das Innere des Rohres (2) eingreift. Diese Stützhülse (9) hat einen etwa zylindrischen Endbereich (10), der in eine zylindrische, koaxial zu dem Rohr (2) verlaufende, axial gegenüber dem Rohrende (2a) versetzte Öffnung (11) in Gebrauchsstellung eingreift und paßt, wobei in dem Eingriffsbereich ein die Aufnahmehülse (3) und die Stützhülse (9) gegeneinander abdichtender Dichtring (12) angeordnet ist, der aufgrund der zylindrischen Ausgestaltung dieses Eingriffsbereiches eine axiale Relativbewegung zuläßt, so daß die Dichtwirkung auch bei einer axialen Verschiebung der Stützhülse (9) erhalten bleibt. Ferner hat die Stützhülse eine Durchmesservergrößerung 14 hinter der die Verklemmung in Gebrauchsstellung wirksam ist, so daß eine geringfügige Axialbewegung unter Zugkraft an dem länglichen Körper oder Rohr 2 zu einer Verstärkung der Verklemmung führt, ohne daß das Rohr über die Durchmesservergrößerung 14 abgezogen werden kann.

## Beschreibung

Die Erfindung betrifft eine Klemmverschraubung für Leitungen, Rohre, Heizungsrohre, Schläuche oder sonstige längliche Hohlkörper aus nachgiebigem Werkstoff, insbesondere aus Kunststoff, die zum Führen eines Mediums, zum Beispiel einer Flüssigkeit, dienen, mit einer Aufnahmehülse, mit einer damit verschraubbaren Überwurfmutter und mit einem durch die Verschraubung an dem länglichen Körper oder Rohr oder dergleichen anpreßbaren Klemmring, wobei der Klemmring mittels einer ringartigen, sich verjüngenden Druckfläche an einer Stirnseite beaufschlagt oder übergriffen ist und beim Anziehen des Gewindes der Verschraubung mit sich verjüngenden Formen, zum Beispiel mittels Konus oder Rundung, gegen den länglichen Körper oder das Rohr hin verformbar und daran andrückbar ist und wobei eine in axialer Richtung lose Stützhülse in dem Klemmbereich in das Innere des Rohres eingreift und die Aufnahmehülse zumindest in Ausgangslage berührt und wobei in dem Berührbereich gegenüber der Aufnahmehülse eine Dichtung angeordnet ist, wobei die Stützhülse mit einem etwa zylindrischen Endbereich in eine zylindrische, koaxial zu dem länglichen Körper oder Rohr verlaufende Öffnung der Aufnahmehülse eingreift und in dem Eingriffsbereich an der Außenseite der Stützhülse und/oder der Innenseite der zylindrischen Öffnung der Aufnahmehülse wenigstens ein die beiden Teile gegeneinander abdichtender Dichtring angeordnet ist, der eine axiale Relativbewegung zwischen Aufnahmehülse und Stützhülse zuläßt.

Eine derartige Klemmverschraubung ist aus DE 299 02 907 U1 oder aus DE 296 12 482 U1 bekannt und hat sich bewährt. Vor allem bei sich ändernden Temperaturen, beispielsweise bei der Beaufschlagung des länglichen Hohlkörpers oder Rohres mit einem Heizmedium, welches kalt oder heiß sein kann, entstehen Wärmebewegungen insbesondere in Längsrichtung des Rohres und der Klemmverschraubung, die zu einer Lockerung dieser Klemmverschraubung führen können. Tritt dabei unter Wärmedehnung oder Kälteschrumpfung eine Zugkraft an dem Rohr auf, kann dieses innerhalb der Klemmverschraubung in axialer Richtung bewegt werden. Dabei sind auch Relativbewegungen zwischen Rohr und Stützhülse nicht ausgeschlossen.

Es besteht deshalb die Aufgabe, bei einer Klemmverschraubung der eingangs definierten Art mit Klemmring und in axialer Richtung auch in Gebrauchsstellung loser Stützhülse die Stützhülse so zu gestalten, daß ihre Verbindung mit dem Rohr oder länglichen Körper auch bei einer Axialbewegung erhalten bleibt und die Möglichkeit besteht, bei einer durch eine Zugkraft bewirkten Axialbewegung die Klemm- und Haltekraft zu verstärken.

Zur Lösung dieser scheinbar widersprüchlichen Aufgabe ist vorgesehen, daß die Stützhülse in axialer Richtung benachbart zum Angriffsbereich des Klemmringes auf der dem Rohrende und der Aufnahmehülse abgewandten Seite eine Durchmesservergrößerung oder einen gegenüber dem zylindrischen Klemmbereich der Stützhülse überstehenden Wulst aufweist und daß der längliche Körper oder das Rohr mittels Klemmring in axialer Richtung hinter der Durchmesservergrößerung oder dem Wulst zusammendrückbar und/oder in radialer Richtung stauchbar ist.

Dadurch, daß der Klemmring ausschließlich neben oder hinter der Durchmesservergrößerung wirksam ist, ergibt sich in axialer Richtung ein Formschluß zwischen dem länglichen Körper und der Stützhülse, so daß eine Axialbewegung des Rohres die Stützhülse etwas mitnimmt oder umgekehrt eine Axialbewegung der Stützhülse zur Mitnahme des Rohres und damit auch des Klemmringes führt. Dadurch kann der Effekt erzielt werden, daß der Klemmring bei einer derartigen Axialbewegung gegenüber der Überwurfmutter noch stärker radial zusammengedrückt wird, weil die Kraftwirkung an der Schrägfläche der Überwurfmutter zunimmt. Dies führt zu einer automatischen Verstärkung der Klemm- und Haltekraft, so daß also eine verstärkte Zugkraft an dem Rohr automatisch zu einer größeren Klemmung und besseren Fixierung führt. Somit wird eine eventuelle Axialbewegung bei einer derartigen Zugkraft entsprechend schnell unterbunden und somit auf ein geringes Maß begrenzt. Die Axialbewegung wird dabei durch den zylindrischen Endbereich der Stützhülse, der in eine zylindrische Öffnung der Aufnahmehülse eingreift und dort abgedichtet ist, ermöglicht, ohne daß dabei die Dichtwirkung nachläßt. Die unter einer Zugkraft auftretende Axialbewegung der losen Stützhülse wird also bewußt dazu benutzt, die Klemm- oder Haltekraft bei einer solchen Zugbelastung automatisch zu verstärken.

Besonders zweckmäßig ist es dabei, wenn der Dichtring in einer an dem zylindrischen Endbereich der Stützhülse vorgesehenen Ringnut angeordnet ist und diese radial überragt. Dies erlaubt eine einfache Montage des Dichtringes an der Stützhülse und der Stützhülse innerhalb der Klemmverschraubung. Die Stützhülse ist dann zusammen mit dem Dichtring in axialer Richtung relativ zu der Aufnahmehülse verschiebbar, ohne daß dadurch die Dichtwirkung nachläßt.

Stattdessen oder zusätzlich können an der Innenseite der zylindrischen Öffnung der Aufnahmehülse eine Hinterschneidung oder Ringnut und ein darin umlaufender Dichtring vorgesehen sein, welcher Dichtring radial vorsteht und die Außenseite des zylindrischen Endbereiches der Stützhülse beaufschlagt. Erforderlichenfalls können auf diese Weise auch zwei Dichtringe vorgesehen werden, die bei einer axialen Verschiebung der Stützhülse dann ihren axialen Abstand etwas ändern.

Dabei kann die axiale Bewegung der Stützhülse und damit die Länge ihres kolbenartigen Dichtbereichs klein gehalten werden, weil eine axiale Bewegung praktisch sofort zu einer durch die Erfindung bewirkten Verstärkung der Klemm- und Haltekraft führt.

Der Klemmring kann an seinen beiden Stirnseiten Schrägflächen, insbesondere gegensinnig zueinander orientierte Schrägflächen, aufweisen, wie es an sich auch aus DE 44 03 702 C2 bekannt ist, und die eine als Schrägfläche ausgebildete Stirnseite kann von der Überwurfmutter und einer an dieser vorgesehenen analogen Schrägfläche und die andere Stirnfläche von einem Druckring oder einer Schrägfläche der Aufnahmehülse beaufschlagt sein, so daß der vorzugsweise mit Axialschlitzen versehene Klemmring beim Verschrauben der Überwurfmutter von beiden Seiten her radial zusammendrückbar ist. Die Axialschlitze reichen dabei, wiederum analog DE 44 03 702 C2 jeweils nicht über die gesamte axiale Ausdehnung des Klemmringes und können jeweils gegensinnig angeordnet, also an entgegengesetzten Stirnseiten des Klemmringes münden.

Vor allem bei einer solchen beidseitigen Beaufschlagung des Klemmringes kann dieser zwei zueinander beabstandete ringförmige Klemmstellen haben, die mit der Außenseite des länglichen Körpers oder Rohres zusammen eine Kammer bilden und an dem länglichen Körper oder Rohr zwei parallele ringförmige Druckstellen und/oder Einschnürungen bilden. Dadurch kann der Formschluß zwischen Klemmring und länglichem Körper in axialer Richtung verbessert werden, so daß bei einer Zugkraft an dem Rohr die Axialbewegung entsprechend kurz gehalten wird.

Die Schraublänge der Überwurfmutter gegenüber der Aufnahmehülse kann, insbesondere durch einen Anschlag, begrenzt sein. Dadurch kann eine zu starke radiale Druckkraft auf den länglichen Körper oder das Rohr und eine daraus resultierende Beschädigung vermieden werden. Falls der Benutzer versucht, die Klemmverschraubung möglichst stark anzuziehen, bestünde ohne eine solche Begrenzung die Gefahr, daß das Rohr zu stark gequetscht werden könnte. Dies kann durch die Begrenzung der Schraublänge vermieden werden. Andererseits kann ein Monteur problemlos die Verschraubung bis an ihren Anschlag betätigen und dadurch eine zu lockere Verschraubung vermeiden.

Eine zweckmäßige Begrenzung der Schraublänge kann darin bestehen, daß am Ende des Gewinde der Überwurfmutter ein radial nach innen überstehender Anschlagvorsprung oder Ringbereich vorgesehen ist, der als Begrenzung der Schraublänge an dem Gewindebereich der Aufnahmehülse axial anschlägt beziehungsweise bei größtmöglicher Verschraubung anliegt. Dies stellt eine besonders einfache Art der Begrenzung der größten Schraublänge der Überwurfmutter gegenüber der Aufnahmehülse dar.

Eine andere oder zusätzliche Maßnahme zur Vermeidung einer zu starken Quetschung des länglichen Körpers oder Rohres durch den Klemmring kann darin bestehen, daß die Stützhülse im Bereich wenigstens einer Klemmstelle des Klemmringes eine radial nachgiebige Dichtung aufweist. Diese erlaubt, daß das Rohr oder der längliche Körper an dieser Stelle - zum Beispiel unter Verformung der Dichtung - radial weiter verformt wird, ohne dabei von der eigentlich harten Stützhülse zu sehr gequetscht zu werden. Gleichzeitig kann dadurch eine verbesserte Abdichtung zwischen Stützhülse und länglichem Körper oder Rohr erzielt werden.

Diese vorteilhaften Wirkungen können verbessert werden, wenn die Dichtung in eine im Bereich der Klemmstelle befindliche Ringnut eingesetzt ist. Gleichzeitig wird dadurch die Dichtung gegen ein zu starkes Verpressen gesichert.

Die in die Stützhülse eingearbeitete Dichtung kann der Durchmesservergrößerung oder dem Wulst der Stützhülse unmittelbar benachbart sein, wobei eine Begrenzungswand der die Dichtung aufnehmenden Ringnut sich in radialer Richtung vorzugsweise als Durchmesservergrößerung fortsetzen kann. Somit kann also die verstärkte radiale Stauchung oder Verformung des länglichen Körpers oder Rohres unmittelbar an der Durchmesservergrößerung erfolgen und somit deren Wirkung, einen axialen Formschluß herzustellen, verbessern.

Ein zwischen der Aufnahmehülse und dem Klemmring angeordneter Druckring kann als Verdrehsicherung oder Verdrehschutz ausgebildet sein und er kann dazu an seinen Berührflächen gegenüber dem Klemmring und/oder der Aufnahmehülse aufgerauht, profiliert oder gerändelt sein. Bei der axialen Verschraubung führt dies zu einem Eindrücken dieser Aufrauhung, Profilierung oder Rändelung in die Gegenfläche, so daß ein Mitdrehen des Druckringes durch die Drehbewegung der Überwurfmutter vermieden wird, weil die Aufnahmehülse sich relativ dazu nicht mitdreht und über dem Druckring auch den Klemmring in Drehrichtung festhält.

Eine diesbezüglich verstärkte Wirkung kann erreicht werden, wenn die aufgerauhte, profilierte oder gerändelten Fläche des Druckringes in Gebrauchsstellung an einer Umfangskante der Aufnahmehülse anliegt. Es ergibt sich dann an dieser umlaufenden Kante der Aufnahmehülse beim axialen Verschrauben eine verstärkte Flächenpressung und eine noch sicherere Bildung eines Formschlusses zwischen der Aufrauhung, Profilierung oder Rändelung des Druckringes und dieser umlaufenden Kante der Aufnahmehülse. Somit wird die Verdrehsicherheit entsprechend größer.

Vor allem bei Kombination einzelner oder mehrerer der vorbeschriebenen Merkmale und Maßnahmen ergibt sich eine Klemmverschraubung, die auch bei starken Belastungen insbesondere in axialer Richtung an dem Rohr nicht undicht wird, weil die Dichtfläche zwischen Stützhülse und Aufnahmehülse eine axiale kolbenartige Bewegung zuläßt und entsprechend abgedichtet ist. Außerdem führt eine axiale Zugkraft an dem Rohr automatisch zu einer Verstärkung der Klemm- und Haltekraft, wobei auch eine Abdichtung zwischen Stützhülse und Rohr wirksam und gegebenenfalls sogar verstärkt werden kann. Durch die Anordnung der Klemmstelle unmittelbar und ausschließlich neben oder hinter der Durchmesservergrößerung oder dem Wulst der Stützhülse wird außerdem vermieden, daß das Rohr bei einer Zugkraft relativ zu dieser Stützhülse über die Durchmesservergrößerung oder den Wulst abgezogen wird.

Nachstehend ist ein Ausführungsbeispiel der Erfindung anhand der Zeichnung näher beschrieben. Es zeigt in zum Teil schematisierter Darstellung:
- Fig. 1: einen Längsschnitt einer erfindungsgemäßen Klemmverschraubung in Explosionsdarstellung, das heißt vor dem axialen Zusammenfügen der einzelnen Teile,
- Fig. 2: einen Längsschnitt der montierten Klemmverschraubung in Klemmstellung, wobei der besseren Deutlichkeit wegen zwischen einem Klemmring und einem diesen beaufschlagenden Druckring ein in Wirklichkeit nicht vorhandener geringfügiger Abstand gezeichnet ist.

Eine im ganzen mit 1 bezeichnete Klemmverschraubung für eine Leitung, ein Rohr, ein Heizungsrohr, einen Schlauch oder einen sonstigen Hohlkörper aus nachgiebigem Werkstoff, im folgenden als "Rohr 2" bezeichnet, das zum Führen eines Mediums, zum Beispiel einer Flüssigkeit oder eines Heizmediums dient und zum Beispiel aus Kunststoff oder einem sonstigen nachgiebigen Werkstoff besteht, weist eine Aufnahmehülse 3 mit einem Anschlußgewinde 4 auf, womit die Klemmverschraubung 1 in eine Gegenhülse oder eine Wandöffnung oder dergleichen einsetzbar ist.

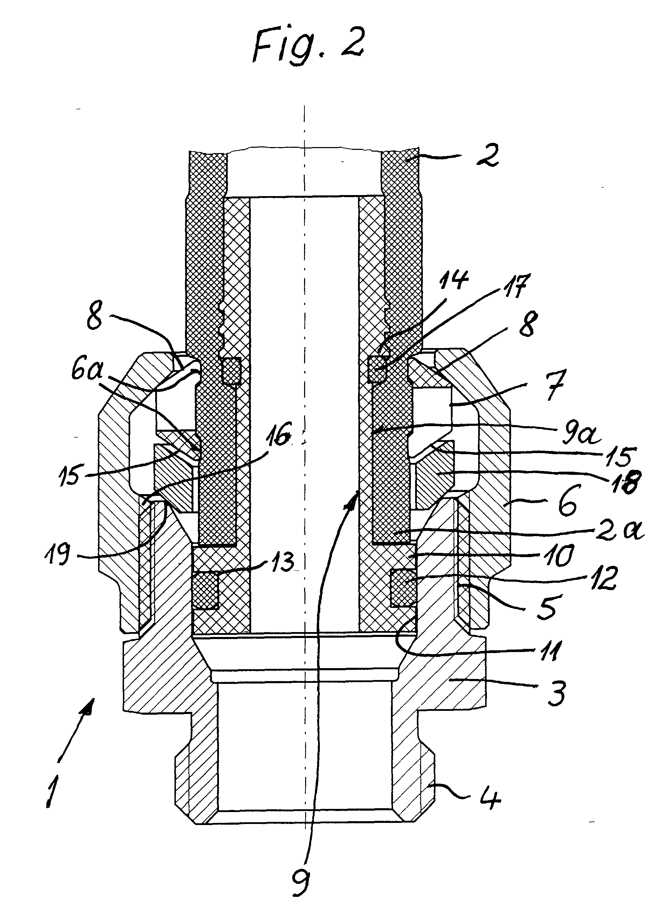

Die Aufnahmehülse 3 weist außerdem ein Verschraubungsgewinde 5 auf, mit welchem eine zu der Klemmverschraubung 1 gehörende Überwurfmutter 6 gemäß Figur 2 verschraubbar ist. Zu der Klemmverschraubung 1 gehört ferner ein durch die Verschraubung an dem länglichen Körper oder Rohr 2 anpreßbarer Klemmring 7, welcher mittels einer ringartigen, sich verjüngenden Druckfläche an einer entsprechenden schrägen Stirnseite 8 beaufschlagt oder übergriffen ist und beim Anziehen des Gewindes 5 der Verschraubung mit sich verjüngenden Formen, im Ausführungsbeispiel mittels eines Innenkonus der Überwurfmutter 6 gegen das Rohr 2 hin verformt und daran angedrückt wird.

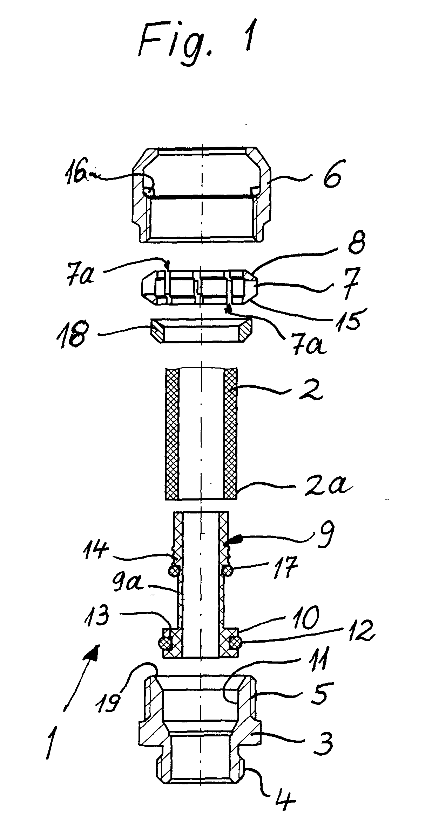

Dabei erkennt man in den Figuren 1 und 2, daß die Klemmverschraubung 1 außerdem eine in axialer Richtung lose Stützhülse 9 aufweist, die in dem Klemmbereich in das Innere des Rohres 2 eingreift und bei der Verklemmung des Klemmringes 7 das auf dieser Stützhülse anliegende Rohr 2 innenseitig abstützt, so daß die Klemmkraft am Umfang des Rohres 2 entsteht.

Die Stützhülse 9 hat einen zylindrischen Endbereich 10, mit welchem sie in eine koaxial zu dem Rohr verlaufende Öffnung 11 der Aufnahmehülse 3 eingreift, die über einen großen Teil ihrer Länge hohlzylindrisch ausgebildet ist. In diesem Eingriffsbereich ist zwischen Stützhülse 9 beziehungsweise deren zylindrischen Endbereich 10 und der Öffnung 11 der Aufnahmehülse 3 ein die beiden Teile gegeneinander abdichtender Dichtring 12 angeordnet, der eine axiale Relativbewegung zwischen Aufnahmehülse 3 und Stützhülse 9 zuläßt. Vor allem in Figur 2 erkennt man deutlich, daß dieser zylindrische Endbereich 10 kolbenartig in der Öffnung 11 der Aufnahmehülse 3 angeordnet ist und also eine axiale Bewegung durchführen kann, ohne daß dadurch die Wirkung der Dichtung 12 vermindert wird. Somit können Zugkräfte am Rohr 2, die zu einer geringfügigen axialen Verstellung der Stützhülse 9 gegenüber der Aufnahmehülse 3 führen die Klemmverschraubung 1 nicht undicht machen.

Der Dichtring 12 ist im Ausführungsbeispiel in einer an dem zylindrischen Endbereich 10 der Stützhülse 9 vorgesehenen Ringnut 13 angeordnet und überragt diese vor der Montage etwas, wie man es in Figur 1 erkennt. In Gebrauchsstellung ergibt sich dadurch der gewünschte Dichtungsdruck an dem Dichtring 12.

Denkbar wäre allerdings auch, den Dichtring 12 in einer Ringnut anzuordnen, die in die Wandung der zylindrischen Öffnung 11 eingearbeitet ist, so daß der Dichtring dann an der Aufnahmehülse 3 vorgesehen wäre. Bei größerer axialer Länge der zylindrischen Öffnung 11 könnten auch beide Maßnahmen, also ein Dichtring in dem zylindrischen Endbereich 10 und ein Dichtring in der Öffnung 11 in axialer Richtung hintereinander vorgesehen sein, falls eine noch bessere Dichtwirkung erwünscht ist. Ebenso könnte aber auch beispielsweise der zylindrische Endbereich 1 0 axial hintereinander mehrere Dichtringe 12 aufweisen.

Sowohl in Figur 1 als auch in Figur 2 erkennt man deutlich, daß die Stützhülse 9 in axialer Richtung benachbart zum Angriffsbereich des Klemmringes 7 auf der dem Rohrende 2a und der Aufnahmehülse 3 abgewandten Seite eine Durchmesservergrößerung 14 aufweist, die auch als gegenüber dem zylindrischen Klemmbereich 9a der Stützhülse 9 überstehender Wulst bezeichnet oder ausgeführt sein kann. Das Rohr 2 ist dadurch mittels Klemmring 7 in axialer Richtung nur neben oder ausschließlich hinter dieser Durchmesservergrößerung 14 zusammendrückbar und/oder in radialer Richtung stauchbar, wie es in Figur 2 angedeutet ist. Dadurch wird in axialer Richtung ein verbesserter Formschluß zwischen dem Rohr 2 beziehungsweise dem Rohrende 2a und der darin eingreifenden Stützhülse 9 erzielt. Entsprechend hohe Zugkräfte an dem Rohr 2 können von der Klemmverschraubung 1 aufgenommen werden. Wenn bei solchen hohen Zugkräften dabei die Stützhülse 9 mit dem Rohr 2 in axialer Richtung etwas von der Aufnahmehülse 3 wegbewegt würde, bleibt dennoch die Dichtung 12 wirksam, da eine solche axiale Bewegung geringer als die axiale Erstreckung der zylindrischen Öffnung 11 sein wird.

Im Ausführungsbeispiel ist ferner vorgesehen, daß der Klemmring 7 an seinen beiden Stirnseiten 8 und 15 Schrägflächen, nämlich gegensinnig zueinander orientierte Schrägflächen aufweist, so daß der in Figur 2 dargestellte Schnitt durch diesen Klemmring im wesentlichen eine Trapezform ergibt, bei welcher die längere Trapezseite unmittelbar an dem Rohr 2 anliegt. Die eine als Schrägfläche ausgebildete Stirnseite 8 wird dabei, wie schon erwähnt, von der Überwurfmutter 6 und einer in deren Inneren angeordneten analogen Schrägfläche und die andere Stirnfläche 15 von einem Druckring 18 beaufschlagt. Der analog der DE 44 03 702 C2 mit Axialschlitzen 7a versehene Klemmring 7 wird somit beim Verschrauben der Überwurfmutter 6 von beiden Seiten her radial zusammengedrückt und kann dadurch auf eine größere axiale Länge wirksam werden.

Dabei erkennt man ferner, daß der Klemmring 7 zwei zueinander beabstandete ringförmige Klemmstellen 6a hat, die mit der Außenseite des Rohres 2 zusammen eine Kammer bilden, wobei diese gemäß Figur 2 aber durch die Druckkraft und den nachgiebigen Werkstoff des Rohres 2 in Gebrauchsstellung praktisch ausgefüllt ist. An dem Rohr 2 ergeben sich durch diese Klemmstellen 6a zwei parallele ringförmige Druckstellen oder Einschnürungen, die in Figur 2 ebenfalls angedeutet sind. Ein entsprechend guter Formschluß wird somit auch an der Außenseite des Rohres 2 erzielt.

Die Schraublänge der Überwurfmutter 6 gegenüber der Aufnahmehülse 3 ist im Ausführungsbeispiel durch einen in Figur 2 angedeuteten Anschlag 16 begrenzt, so daß eine zu starke Klemmung und Einschnürung des Rohres 2 vermieden werden kann. Dabei befindet sich dieser Anschlag am Ende des Gewindes der Überwurfmutter 6 und ist als radial nach innen überstehender Anschlagvorsprung oder Ringbereich ausgebildet. In Figur 2 ist dargestellt, daß er als Begrenzung der Schraublänge an dem Gewindebereich oder Verschraubungsgewinde 5 der Aufnahmehülse 3 anschlägt beziehungsweise bei größtmöglicher Verschraubung anliegt. Einer weiteren Verschraubung wirkt also dieser Anschlag 16 und nicht eine Verstärkung der Verklemmung des Klemmringes 7 entgegen.

Die Stützhülse 9 weist im Bereich der einen Klemmstelle 6a des Klemmringes 7 eine in einer Ringnut eingesetzte, auch radial nachgiebige Dichtung 17 auf, so daß an dieser Klemmstelle 6a die Innenseite des Rohres 2 nicht nur abgedichtet, sondern auch etwas gepolstert wird. Einerseits wird durch diese Anordnung die Dichtwirkung zwischen der Innenseite des Rohres 2 und der Stützhülse 9 verbessert und andererseits eine zu starke radiale Verpressung des Rohres 2 vermieden.

Dabei ist im Ausführungsbeispiel die in die Stützhülse 9 eingearbeitete Dichtung 17 der Durchmesservergrößerung 14 oder dem Wulst der Stützhülse 9 unmittelbar benachbart. Man erkennt in Figur 2, daß eine Begrenzungswand der die Dichtung 17 aufnehmenden Ringnut sich in radialer Richtung als Durchmesservergrößerung 14 beziehungsweise deren Anfang fortsetzt. Bei der Verformung des Rohres 2 im Bereich der Durchmesservergrößerung 14 ergibt sich so ein weniger steiler und zusätzlich noch etwas abgepolsteter Übergang, der die Materialstruktur des Rohres 2 trotz starker Verklemmung schont.

Die Klemmverschraubung 1 weist außerdem zwischen der Aufnahmehülse 3 und dem Klemmring 7 den diesen beaufschlagenden Druckring 18 auf, der gleichzeitig als Verdrehsicherung oder Verdrehschutz ausgebildet ist, wofür an seinen Berührflächen gegenüber dem Klemmring 7 und dessen Stirnseite 15 einerseits und gegenüber der Aufnahmehülse 3 aufgerauht, profiliert oder gerändelt ist. Dabei erkennt man außerdem, daß die aufgerauhte, profilierte oder gerändelte Fläche des Druckringes 18 in Gebrauchsstellung an der Aufnahmehülse 3 nicht flächig, sondern an einer ringförmig umlaufenden Umfangskante 19 dieser Aufnahmehülse 3 zur Anlage kommt, so daß die axiale Druckkraft mit größerer Sicherheit dazu führt, daß sich die Aufrauhung, Profilierung oder Rändelung in diese Umfangskante 19 einprägt und einen entsprechenden Formschluß in Drehrichtung bewirkt.

Insgesamt ergibt sich eine Klemmverschraubung 1, die eine gute Abdichtung des Rohres 2 beziehungsweise des Rohrendes 2a aufweist, wobei diese Abdichtung auch erhalten bleibt, wenn durch eine Zugkraft an dem Rohr 2 eine Axialbewegung der Stützhülse 9 gegenüber der Aufnahmehülse 3 auftritt. Gleichzeitig wird durch eine solche Axialbewegung die Klemmwirkung proportional zu einer solchen Zugkraft und einer solchen Axialbewegung erhöht, was einer solchen Axialbewegung entgegenwirkt.

Die Klemmverschraubung 1 dient zum Befestigen eines länglichen Körpers oder Rohres 2, also einer zum Führen einer Flüssigkeit geeigneten Leitung. Sie weist dazu eine Aufnahmehülse 3 zum Einstecken des Endes 2a des Rohres 2 und eine mit dieser Aufnahmehülse 3 verschraubbare Überwurfmutter 6 sowie einen durch die Verschraubung an dem Rohr 2 anpreßbaren Klemmring 7 auf, der mittels sich verjüngender Flächen stirnseitig beaufschlagt und beim Anziehen des Gewindes 5 der Verschraubung mit sich verjüngenden Formen gegen das Rohr 2 hin verformbar und daran andrückbar ist. Zur Aufnahme der Klemmkraft gehört zu der Klemmverschraubung ferner eine in axialer Richtung lose Stützhülse 9, die im Klemmbereich in das Innere des Rohres 2 eingreift. Diese Stützhülse 9 hat einen etwa zylindrischen Endbereich 10, der in eine zylindrische, koaxial zu dem Rohr 2 verlaufende, axial gegenüber dem Rohrende 2a versetzte Öffnung 11 in Gebrauchsstellung eingreift und paßt, wobei in dem Eingriffsbereich ein die Aufnahmehülse 3 und die Stützhülse 9 gegeneinander abdichtender Dichtring 12 angeordnet ist, der aufgrund der zylindrischen Ausgestaltung dieses Eingriffsbereiches eine axiale Relativbewegung zuläßt, so daß die Dichtwirkung auch bei einer axialen Verschiebung der Stützhülse 9 erhalten bleibt. Ferner hat die Stützhülse eine Durchmesservergrößerung 14 hinter der die Verklemmung in Gebrauchsstellung wirksam ist, so daß eine geringfügige Axialbewegung unter Zugkraft an dem länglichen Körper oder Rohr 2 zu einer Verstärkung der Verklemmung führt, ohne daß das Rohr über die Durchmesservergrößerung 14 abgezogen werden kann.

## Patentansprüche

1. Klemmverschraubung (1) für Leitungen, Rohre (2), Heizungsrohre, Schläuche oder sonstige längliche Hohlkörper aus nachgiebigem Werkstoff oder aus Kunststoff, die zum Führen eines Mediums dienen, mit einer Aufnahmehülse (3), mit einer damit verschraubbaren Überwurfmutter und mit einem durch die Verschraubung an dem länglichen Körper oder Rohr (2) oder Klemmring (7), wobei der Klemmring mittels einer ringartigen, sich verjüngenden Druckfläche an einer Stirnseite (8) beaufschlagt oder übergriffen ist und beim Anziehen des Gewindes (5) der Verschraubung mit sich verjüngenden Formen oder mittels Konus oder Rundung gegen den länglichen Körper oder das Rohr hin verformbar und daran andrückbar ist und wobei eine in axialer Richtung lose Stützhülse (9) in dem Klemmbereich in das Innere des Rohres (2) eingreift und die Aufnahmehülse (3) zumindest in Ausgangslage berührt und wobei in dem Berührbereich gegenüber der Aufnahmehülse (3) eine Dichtung angeordnet ist, wobei die Stützhülse (9) mit einem etwa zylindrischen Endbereich (10) in eine zylindrische, koaxial zu dem länglichen Körper oder Rohr (2) verlaufende Öffnung (11) der Aufnahmehülse (3) eingreift und in dem Eingriffsbereich an der Außenseite der Stützhülse und/oder der Innenseite der zylindrischen Öffnung (11) der Aufnahmehülse (3) wenigstens ein die beiden Teile gegeneinander abdichtender Dichtring (12) angeordnet ist, der eine axiale Relativbewegung zwischen Aufnahmehülse (3) und Stützhülse (9) zuläßt, **dadurch gekennzeichnet, daß** die Stützhülse (9) in axialer Richtung benachbart zum Angriffsbereich des Klemmringes (7) auf der dem Rohrende (2a) und der Aufnahmehülse (3) abgewandten Seite eine Durchmesservergrößerung (14) oder einen gegenüber dem zylindrischen Klemmbereich (9a) der Stützhülse (9) überstehenden Wulst aufweist und daß der längliche Körper oder das Rohr (2) mittels Klemmring (7) in axialer Richtung hinter der Durchmesservergrößerung (14) oder dem Wulst zusammendrückbar und/oder in radialer Richtung stauchbar ist.

2. Klemmverschraubung nach Anspruch 1, **dadurch gekennzeichnet, daß** der Dichtring (12) in einer an dem zylindrischen Endbereich (10) der Stützhülse (9) vorgesehenen Ringnut (13) angeordnet ist und diese radial überragt.

3. Klemmverschraubung nach Anspruch 1 oder 2, **dadurch gekennzeichnet, daß** an der Innenseite der zylindrischen Öffnung (11) der Aufnahmehülse (3) eine Hinterschneidung oder Ringnut und ein darin umlaufender Dichtring (12) vorgesehen sind, welcher Dichtring radial vorsteht und die Außenseite des zylindrischen Endbereiches (10) der Stützhülse (9) beaufschlagt.

4. Klemmverschraubung nach einem der Ansprüche 1 bis 3, **dadurch gekennzeichnet, daß** der Klemmring (7) an seinen beiden Stirnseiten (8, 15) gegensinnig zueinander orientierte Schrägflächen, aufweist und daß die eine als Schrägfläche ausgebildete Stirnseite (8) von der Überwurfmutter (6) und einer an dieser vorgesehenen analogen Schrägfläche und die andere Stirnfläche (15) von einem Druckring (16) oder einer Schrägfläche der Aufnahmehülse beaufschlagt sind, so daß der Klemmring (7) beim Verschrauben der Überwurfmutter (6) von beiden Seiten her radial zusammendrückbar ist.

5. Klemmverschraubung nach Anspruch 4, **dadurch gekennzeichnet, daß** der Klemmring (7) mit Axialschlitzen (7a) versehen ist.

6. Klemmverschraubung nach Anspruch 4 oder 5, **dadurch gekennzeichnet, daß** der Klemmring (7) zwei zueinander beabstandete ringförmige Klemmstellen (6a) hat, die mit der Außenseite des länglichen Körpers oder Rohres (2) zusammen eine Kammer bilden und an dem länglichen Körper oder Rohr (2) zwei parallele ringförmige Druckstellen und/oder Einschnürungen bilden.

7. Klemmverschraubung nach einem der Ansprüche 1 bis 6, **dadurch gekennzeichnet, daß** die Schraublänge der Überwurfmutter (6) gegenüber der Aufnahmehülse (3) durch einen Anschlag (16) begrenzt ist.

8. Klemmverschraubung nach Anspruch 7, **dadurch gekennzeichnet, daß** am Ende des Gewindes der Überwurfmutter (6) ein radial nach innen überstehender Anschlagvorsprung oder Ringbereich vorgesehen ist, der als Begrenzung der Schraublänge an dem Gewindebereich der Aufnahmehülse (3) axial anschlägt oder bei größtmöglicher Verschraubung anliegt.

9. Klemmverschraubung nach einem der Ansprüche 1 bis 10, **dadurch gekennzeichnet, daß** die Stützhülse (9) im Bereich wenigstens einer Klemmstelle (6a) des Klemmringes (7) eine radial nachgiebige Dichtung (17) aufweist.

10. Klemmverschraubung nach Anspruch 9, **dadurch gekennzeichnet, daß** die Dichtung (17) in eine im Bereich der Klemmstelle (6a) befindliche Ringnut eingesetzt ist.

11. Klemmverschraubung nach Anspruch 9 oder 10, **dadurch gekennzeichnet, daß** die in die Stützhülse (9) eingearbeitete Dichtung (17) der Durchmesservergrößerung (14) oder dem Wulst der Stützhülse (9) unmittelbar benachbart ist und daß eine Begrenzungswand der die Dichtung (17) aufnehmenden Ringnut sich in radialer Richtung als Durchmesservergrößerung (14) fortsetzt.

12. Klemmverschraubung nach einem der Ansprüche 1 bis 11, **dadurch gekennzeichnet, daß** ein zwischen der Aufnahmehülse (3) und dem Klemmring (7) angeordneter Druckring (18) als Verdrehsicherung oder Verdrehschutz ausgebildet ist und er dazu an seinen Berührflächen gegenüber dem Klemmring (7) und der Aufnahmehülse (3) aufgerauht, profiliert oder gerändelt ist.

13. Klemmverschraubung nach Anspruch 12, **dadurch gekennzeichnet, daß** die aufgerauhte, profilierte oder gerändelte Fläche des Druckrings (18) in Gebrauchsstellung an einer Umfangskante (19) der Aufnahmehülse (3) anliegt.
